# EUROPÄISCHE PATENTANMELDUNG

(11) **EP 0 706 070 A2**
(43) Veröffentlichungstag der Anmeldung: **10.04.1996**
(21) Anmeldenummer: 95115231.3
(22) Anmeldetag: 26.09.1995
(51) Int. Cl.: G02B 6/42, C23F 1/00

(54) **Verfahren zum Trockenätzen eines Halbleitersubstrats**

(30) Priorität: 04.10.1994 DE 4435459
(71) Anmelder: SIEMENS AKTIENGESELLSCHAFT, D-80333 München (DE)
(72) Erfinder: Dietrich, Ralf, Dipl.-Ing., D-81543 München (DE); Gerhard, Franz, Dr. Dipl.-Chem., D-81543 München (DE)

(57) **Zusammenfassung**

Ein Verfahren zum Trockenätzen eines Halbleitersubstrats, bei dem unter Verwendung einer geeigneten Maskierung und eines geeigneten Ätzmittels auf der Oberfläche eines Halbleiterwafers konvexe Strukturen erzeugt werden, soll ermöglichen, konvexe monolithische Linsensysteme herzustellen. Auf den Halbleiterwafer (1) wird eine dicke Fotolackschicht (2) aufgebracht, die Fotolackschicht (2) wird strukturiert, die strukturierte Fotolackschicht (2) wird zum Erzeugen einer sphärischen Struktur durch Temperatureinwirkung verflüssigt und dann als ätzbare Maskierung ausgehärtet, und der mit der Fotolackschicht (2) strukturierte Halbleiterwafer (1) wird im Plasma mit für Halbleitermaterial und Fotolack ähnlichen Ätzgeschwindigkeiten geätzt, so daß die konvexe Struktur der Fotolackschicht (2) während deren Abätzung in den Halbleiterwafer (1) übertragen wird.

## Beschreibung

Die Erfindung betrifft ein Verfahren zum Trockenätzen eines Halbleitersubstrats, bei dem unter Verwendung einer geeigneten Maskierung und eines geeigneten Ätzmittels auf der Oberfläche eines Halbleiterwafers konvexe Strukturen erzeugt werden.

In der Lichtwellenleitertechnik werden Sende- und Empfangsbauelemente verwendet, die elektrische Signale in Licht umwandeln und in eine Glassfaser einkoppeln bzw. Licht aus einer Glasfaser auskoppeln und in elektrische Signale umwandeln. Solche optoelektronische Wandler, die mit einer Linsenkoppeltechnik ausgerüstet sind, sind bekannt und beispielsweise in der EP-A-412 184 und EP-A-421 118 beschrieben. Zum Ein- bzw. Auskoppeln des Lichts in bzw. aus der Faser benötigt man Mikrolinsensysteme, die die divergierenden Lichtstrahlen bündeln. Die einzelnen Bauelemente müssen dabei auf wenige Mikrometer genau zueinander justiert sein. Verwendet man diskrete Linsen aus Glas, Saphir oder Silizium, so benötigt man hochgenaue Fassungen, die wiederum zwischen den aktiven Bauelementen und der Lichtleitfaser justiert und befestigt werden müssen, und zwar derart, daß auch nach Jahren extremer Belastungen keine Verschiebungen bzw. Dejustagen erfolgen.

Aus der EP-A-280 305 ist ein optoelektronisches Koppelelement bekannt, bei dem diskrete Kugellinsen aus verschiedenen Materialien zur Lichteinkopplung verwendet werden, die in hochpräzisen Siliziumfassungen befestigt sind. Dabei müssen die Linsen allerdings in einzelne Löcher gebracht und eingeschmolzen werden. Bei den hohen Einschmelztemperaturen können Verspannungen zwischen den einzelnen Komponenten durch unterschiedliche Ausdehunungskoeffizienten auftreten, so daß beim Abkühlen Risse in den Linsen oder in dem Siliziumträger entstehen können. Sowohl die unbestückten Siliziumscheiben als auch die mit Linsen bestückten Siliziumscheiben sind dreidimensionel erheblich strukturiert, so daß die sonst üblichen planaren Halbleiterprozesse nur schwer oder gar nicht anwendbar sind. Eine Verbesserung konnte durch die Verwendung von diskreten Silizium-Kugellinsen erreicht werden, da hier bei gleichzeitigem Einsatz von Siliziumträgern die thermischen Spannungen nicht vorhanden sind. Außerdem erlauben diese Linsen höhere Montagetoleranzen beim Justieren zwischen dem aktiven optischen Bauelement und dem Lichtwellenleiter bzw. der Glasfaser. Allerdings sind diese Linsen relativ teuer und müssen nach dem Einschmelzen, bedingt durch die optischen Anforderungen, aufwendig abgeschliffen werden.

Eine deutliche Vereinfachung bekannter Koppeloptiken läßt sich erreichen, wenn die aktiven Bauelemente mit integrierten Mikrolinsen ausgestattet werden. Diese Systeme sind infolge geringeren Justieraufwands und größerer Montagetoleranzen kostengünstiger als Abbildungs-Optiken mit Einzellinsen. Für Wellenlängen >1,1µm kann beispielsweise Silizium als Linsenmaterial verwendet werden. Bedingt durch den hohen Brechungsindex können plankonvexe Linsen mit relativ großem Radius verwendet werden, wobei die Verluste z.B. durch sphärische Aberration im Vergleich zu Glas- oder Saphirlinsen deutlich geringer sind. Allerdings konnten bisher keine Strukturen aus Silizium mit sphärischen Krümmungen in der gewünschten Größenordnung hergestellt werden.

Der Erfindung liegt die Aufgabe zugrunde, ein Verfahren zum Trockenätzen eines Halbleitersubstrats zu schaffen, mit dem es möglich ist, konvexe monolithische Linsensysteme herzustellen, die insbesondere in der Lichtwellenleitertechnik verwendbar sind.

Diese Aufgabe wird bei einem Verfahren der eingangs genannten Art erfindungsgemäß durch die Merkmale des Anspruchs 1 gelöst.

Vorteilhafte Ausgestaltungen bzw. Weiterbildungen der Erfindung sind Gegenstand zusätzlicher Ansprüche.

Die mit der Erfindung erzielten Vorteile bestehen insbesondere darin, daß mit dem erfindungsgemäßen Verfahren keine diskrete Linse mehr auf einem beispielsweise Silizium-Träger befestigt zu werden braucht, sondern die erforderliche Linsengeometrie direkt aus einem vorzugsweise aus Silizium bestehenden Wafer herausgeätzt wird. Der hybride Aufbau einer Koppellinse wird demnach durch eine monolithisch integrierte Linse ersetzt.

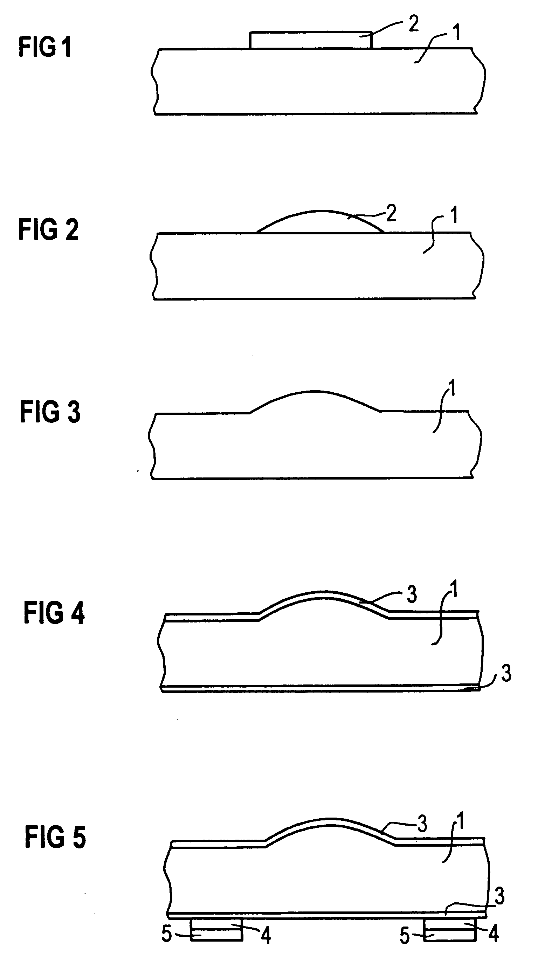

Anhand eines in den Figuren der Zeichnung dargestellten, bevorzugten Ausführungsbeispiels wird das erfindungsgemäße Verfahren näher erläutert. Es zeigen FIG 1 bis FIG 5 die einzelnen Verfahrensschritte.

Gemäß FIG 1 wird auf einen Halbleiterwafer 1 zunächst eine sehr dicke Fotolackschicht 2 aufgebracht. Als Halbleitermaterial sind III/V-Verbindungshalbleiter, z.B. GaP, InP, aber auch Ge geeignet. Vorzugsweise wird Silizium verwendet. Die Dicke der Lackschicht 2 kann zweckmäßig zwischen ungefähr 10µm bis 60µm betragen. Die Fotolackschicht 2 ist also um ein Mehrfaches dicker als sonst in der Halbleitertechnik üblich. Durch Fotolithographie wird die Lackschicht dann so strukturiert, daß Lackzylinder gebildet werden. Mittels Wärmebehandlung, wobei die Temperatur weit oberhalb der normalen Ausheiztemperatur des Fotolackes liegen muß, werden die Lackzylinder verflüssigt, wobei sich durch die Oberflächenspannung sphärische Kugelkalotten bilden (FIG 2), die im weiteren ausgehärtet werden. In einem Plasma werden dann Halbleitermaterial, vorzugsweise Silizium, und Fotolackschicht 2 in einem bestimmten Ätzverhältnis zueinander geätzt, wobei die Lackkalotte in den Halbleiterwafer 1 übertragen und die Fotolackschicht 2 gleichzeitig entfernt bzw. abgeätzt wird (FIG 3). Das Ätzverhältnis beträgt zweckmäßig meistens 1:1, d.h. die Ätzgeschwindigkeiten für das Halbleitermaterial und den Fotolack sind ähnlich bzw. nahezu gleich.

Als Ätzgase für den Trockenätzprozeß werden vorzugsweise Gemische auf SF₆, O₂, He und CHF₃ verwendet. Zum Ätzen eines aus Silizium bestehenden Halbleiterwafers 1 hat sich ein Gasgemisch aus SF₆ und O₂ als vorteilhaft erwiesen. Da sich die angebotenen Flächen von Halbleitermaterial und Fotolack zueinander während des Ätzprozesses ändern, ändern sich auch die Ätzgeschwindigkeiten von Halbleitermaterial und Fotolack zueinander, so daß die Lackkalotte immer ungenauer abgebildet wird. Mit Hilfe der Gaszusammensetzung, des Druckes und der eingekoppelten Leistung im Plasma läßt sich dieser Effekt jedoch ausgleichen. Man muß also während des Prozesses die Ätzparameter kontinuierlich neu auf die jeweiligen Bedingungen anpassen. Durch diese Änderungen und damit durch die Beeinflussung des Ätzratenverhältnisses von Halbleitermaterial zu Fotolack können auch asphärische Linsensysteme hergestellt werden, die eine höhere numerische Apertur haben und damit einen höheren Kopplungswirkungsgrad ermöglichen. Das bedeutet, daß auch achsenferne Strahlen erfaßt werden können.

Gemäß FIG 4 kann der mit den konvexen Strukturen versehene Halbleiterwafer 1 mit einer Antireflexschicht 3 als dielektrische Vergütungsschicht überzogen werden. Im Falle der Verwendung eines Halbleiterwafers 1 aus Silizium wird der Wafer 1 mit einer Si₃N₄-Schicht als Antireflexschicht 3 überzogen, die im Plasmaverfahren aufgebracht wird.

Damit das Linsensystem zwischen einem Halbleiterchip, beispielsweise einem Laserchip als optischen Sender und einer Glasfaser als Lichtwellenleiter sicher befestigt werden kann, werden noch als Metallkontakte eine Metallisierungsschicht 4 und als Befestigungslot eine lötfähige Befestigungsschicht 5 auf der Rückseite des Halbleiterwafers 1 aufgebracht und entsprechend strukturiert (FIG 5). Als Metallisierung kommt in dem Fall der Verwendung von Silizium für den Halbleiterwafer 1 vorzugsweise eine Ti/Pt/Au-Schichtenfolge und als Lot AuSn 80:20 in Betracht. Beide Schichten 4, 5 werden aufgedampft und fotolithographisch strukturiert.

Die Erzeugung der konvexen Strukturen im Halbleiterwafer 1, das Aufbringen der Antireflexschicht 3 und das Strukturieren der Metallisierungsschicht 4 mit lötfähiger Befestigungsschicht 5 werden vorteilhaft im Waferverband durchgeführt und erst dann wird eine Vereinzelung der konvexen Linsen vorgenommen.

## Patentansprüche

1. Verfahren zum Trockenätzen eines Halbleitersubstrates, bei dem unter Verwendung einer geeigneten Maskierung und eines geeigneten Ätzmittels auf der Oberfläche eines Halbleiterwafers konvexe Strukturen erzeugt werden, **dadurch gekennzeichnet**, daß auf den Halbleiterwafer (1) eine dicke Fotolackschicht (2) aufgebracht wird, daß die Fotolackschicht (2) strukturiert wird, daß die strukturierte Fotolackschicht (2) zum Erzeugen einer sphärischen Struktur durch Temperatureinwirkung verflüssigt und dann als ätzbare Maskierung ausgehärtet wird, und daß der mit der Fotolackschicht (2) strukturierte Halbleiterwafer (1) im Plasma mit für das Halbleitermaterial und den Fotolack ähnlichen Ätzgeschwindigkeiten geätzt wird, so daß die konvexe Struktur der Fotolackschicht (2) während deren Abätzung in den Halbleiterwafer (1) übertragen wird.

2. Verfahren nach Anspruch 1, **dadurch gekennzeichnet**, daß als Halbleitermaterial Silizium oder III/V-Verbindungshalbleitermaterial verwendet wird.

3. Verfahren nach Anspruch 1 oder 2, **dadurch gekennzeichnet**, daß die Fotolackschicht (2) in einer Dicke von ungefähr 10µm bis 60µm auf den Halbleiterwafer (1) aufgebracht wird.

4. Verfahren nach einem der Ansprüche 1 bis 3, **dadurch gekennzeichnet**, daß als Ätzgase Gemische aus SF₆, O₂, He und CHF₃ verwendet werden.

5. Verfahren nach einem der Ansprüche 1 bis 4, **dadurch gekennzeichnet**, daß der mit konvexen Strukturen versehenen Halbleiterwafer (1) mit einer dielektrischen Antireflexschicht (3) versehen wird.

6. Verfahren nach einem der Ansprüche 1 bis 5, **dadurch gekennzeichnet**, daß auf der Rückseite des Halbleiterwafers (1) eine Metallisierungsschicht (4) und eine lötfähige Befestigungsschicht (5) aufgebracht und strukturiert werden.

7. Verfahren nach einem der Ansprüche 1 bis 6, **dadurch gekennzeichnet**, daß die Erzeugung der konvexen Strukturen im Halbleiterwafer (1), das Aufbringen der Antireflexschicht (3), und das Strukturieren der Metallisierungsschicht (4) mit lötfähiger Befestigungsschicht (5) im Waferverband durchgeführt und erst dann eine Vereinzelung vorgenommen wird.
